# NOUVEAU FASCICULE DE BREVET EUROPEEN

(11) **EP 0 437 125 B2**
(45) Date de publication et mention de la décision concernant l'opposition: **31.07.2002**
(45) Mention de la délivrance du brevet: 09.08.1995
(21) Numéro de dépôt: 90403464.2
(22) Date de dépôt: 06.12.1990
(51) Int. Cl.: F16D 13/68, F16F 15/12

(54) **Dispositif amortisseur de torsion, notamment pour embrayages de véhicules automobiles**
Drehschwingungsdämpfer, insbesondere für Kraftfahrzeugkupplungen
Torsional damping device, especially for automotive vehicle clutches

(30) Priorité: 12.12.1989 FR 8916391
(43) Date de publication de la demande: 17.07.1991
(73) Titulaire: VALEO, 75848 Paris Cédex 17 (FR)
(72) Inventeur: Jaccod, Michel, F-94500 Champigny-Sur-Marne (FR); Tauvron, Fabrice, F-94000 Creteil (FR)
(74) Mandataire: Gamonal, Didier

(56) Documents cités:
- EP-A- 0 069 458
- FR-A- 2 267 482
- FR-A- 2 532 019
- FR-A- 2 568 649
- US-A- 3 327 820
- US-A- 3 684 070

## Description

La présente invention concerne les dispositifs amortisseur de torsion, notamment pour embrayages de véhicules automobiles, selon le préambule de la revendication 1.

Un tel dispositif à deux parties coaxiales est décrit dans le document FR-A-2 183 389, l'une des parties coaxiales comportant un voile, tandis que l'autre comporte deux rondelles de guidage disposées de part et d'autre dudit voile.

Dans celui-ci la deuxième rondelle de frottement est au contact d'une autre rondelle de frottement liée en rotation à l'une desdites parties, avec une différenciation du frottement entre les deux faces de la rondelle de frottement à patte de butée, l'un des frottement étant du type métal sur métal, tandis que l'autre est du type métal sur matériau anti-friction.

On a également prévu de ne pas faire intervenir cette rondelle de manière symétrique.

D'une manière générale il peut être intéressant, dans certaines applications, pour un meilleur amortissement, de mettre en action ladite rondelle, de manière différenciée suivant qu'elle intervient dans le sens rétro ou dans le sens direct.

Ceci peut être réalisé en s'inspirant du document FR-A-2 267 482 conforme au préambule de la revendication 1, qui utilise une rondelle avec des pattes repliées axialement qui pénètrent, avec un jeu circonférentiel prédéterminé, dans des ouvertures correspondantes d'une des rondelles de guidage.

Une telle disposition, à cause des ouvertures, conduit à affaiblir la rondelle de guidage tout en posant des problèmes de tolérances de fabrication et, à cause des pattes repliées, complique la fabrication de ladite rondelle de frottement. En outre, il faut prévoir une autre patte pour l'appui de l'organe élastique concerné.

Dans le document FR-A-2 532 019, il est décrit une solution avec une plaque d'entraînement dotée de fenêtres pour montage sur des ressorts d'entraînement et des pattes de butées décalées circonférentiellement par rapport aux fenêtres. Cette plaque a une une forme compliquée et n'intervient pas de manière différenciée.

La présente invention a pour objet de pallier ces inconvénients et donc de créer une nouvelle disposition économique permettant de faire intervenir de manière différenciée suivant le sens rétro ou direct la rondelle de frottement à patte de butée, tout en ne fragilisant pas outre mesure les rondelles de guidage et en simplifiant ladite rondelle de frottement.

Suivant l'invention un dispositif amortisseur de torsion du type susindiqué est caractérisé en ce que, en combinaison, ladite patte de butée s'étend globalement radialement en étant dépourvue de fenêtre et comporte une protubérance radiale insérée circonférentiellement entre une saillie, portée axialement par l'une au moins des rondelles de guidage, et l'un des organes élastiques, dit organe élastique concerné, et en ce que l'organe élastique concerné sollicite la protubérance au contact de la saillie, en sorte que la patte de butée est insérée sans jeu entre la saillie et l'organe élastique concerné.

Grâce à l'invention, la rondelle de frottement est simplifiée ainsi que les problèmes de tolérances de fabrication. Elle est plus résitante et est en appui sur les saillies dans le sens direct, un mouvement relatif se produisant entre celle-ci et l'un des constituants rondelles de guidage-voile, par contre dans le sens inverse, dit sens rétro, la rondelle est en phase avec ledit constituant rondelles de guidage-voile. La patte outre une fonction de butée a également une fonction d'appui, en sorte que par rapport à la réalisation du document FR-A-2 267 482, on économise une patte.

De plus, la rondelle de frottement avec la patte selon l'invention, ne présente pas de fenêtres, contrairement à la réalisation décrite dans le document FR-A-2 532 019, ladite patte s'étendant globalement radialement.

Grâce à l'invention, il est possible d'utiliser un maximum de pièces standards d'un amortisseur de torsion classique, et les rondelles de guidage ainsi que le voile ne sont pas affaiblis.

En effet on peut tirer parti des entretoises reliant l'une à l'autre les rondelles de guidage pour insérer circonférentiellement la patte de butée entre l'une desdites entretoises et l'un desdits organes élastiques.

En variante on peut tirer parti des rivets fixant le disque de friction à l'une des rondelles de guidage.

En variante afin de gagner de la matière sur la rondelle de guidage, la saillie peut avantageusement consister en un embouti local pratiqué dans l'une des rondelles de guidage.

On appréciera que cet embouti n'affaiblit pas la rondelle de guidage, et que la rondelle de frottement peut être en contact directement avec ledit disque ou ladite rondelle de guidage.

Dans tous les cas, la patte de butée n'a pas besoin d'être pliée.

La description en annexe illustre, à titre d'exemple, en référence aux dessins annexés, dans lequel :
- la figure 1 est une vue en coupe axiale d'un amortisseur de torsion, selon la ligne I-I de la figure 2;
- la figure 2 est une vue selon la flèche F de la figure 1 sans le disque porte-garnitures et avec arrachement partiel avec la rondelle de guidage.

Ces figures illustrent l'application de l'invention à la réalisation d'un disque de friction pour embrayages, en particulier pour véhicules automobiles.

Un tel disque comporte un moyeu 1, dont l'alésage interne est cannelé pour en permettre la solidarisation en rotation à un arbre, ici l'arbre mené d'entrée de la boîte de vitesses du véhicule automobile.

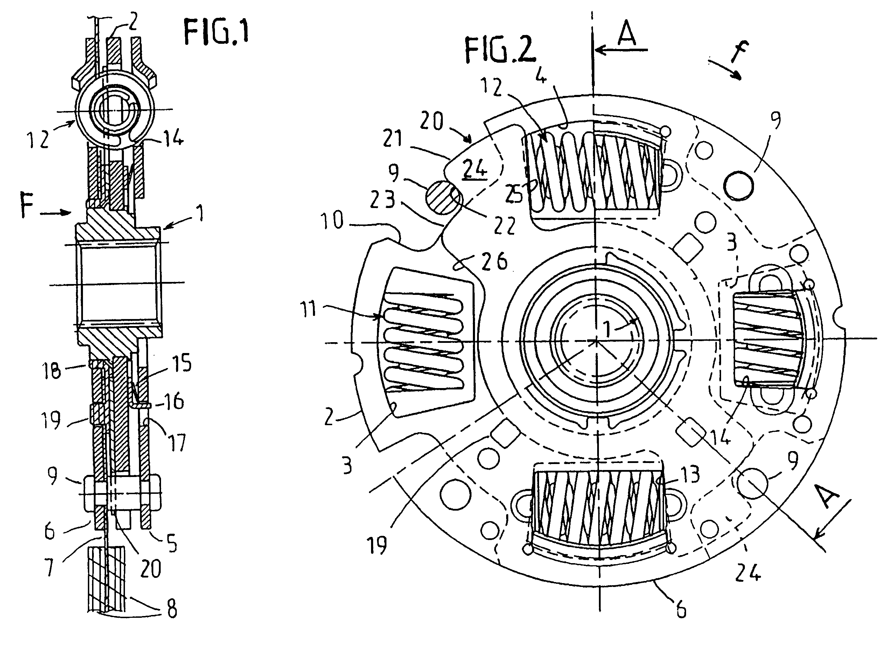

Dans sa zone médiane le moyeu 1 porte extérieurement et radialement un voile de moyeu 2 présentant circulairement, de place en place, (figure 2), deux jeux de logements 3,4 alternativement imbriqués.

Ici ces logements consistent en des fenêtres 3,4, et celles-ci sont au nombre de quatre, à savoir, deux fenêtres 3 diamétralement opposées et deux fenêtres 4 diamétralement opposées, lesdites fenêtres étant décalées angulairement de 90° les unes par rapport aux autres.

Ces fenêtres sont toutes allongées suivant une direction sensiblement tangentielle à une même circonférence du voile 2.

Ce voile 2 est flanqué latéralement de deux rondelles de guidage 5,6 disposées axialement de part et d'autre de celui-ci.

Ces rondelles 5,6 sont solidarisées l'une à l'autre par des entretoises, ici sous forme de colonnettes 9, qui traversent avec un large jeu des échancrures 10 du voile 2.

Ces échancrures 10 sont ouvertes en étant disposées à la périphérie externe du voile 2. Elles alternent avec les fenêtres 3,4 et servent, en coopération avec les entretoises 9, à la limitation du débattement angulaire relatif entre les rondelles 5,6 et le voile 2, de manière décrites ci-après.

Les colonnettes 9 s'étendent sur une circonférence de diamètre supérieur au diamétre moyen de ressorts 11-12 décrits ci-après.

Suivant une disposition analogue, en regard des fenêtres 3, les rondelles 5,6 présentent des logements 13, ici sous forme de fenêtres; l'ouverture des fenêtres 13 étant inférieure à celles des fenêtres 3 correspondantes.

En regard des fenêtres 4, les rondelles 5,6 présentent des logements 14, ici sous forme de fenêtres; l'ouverture des fenêtres 14 étant identique à celles des fenêtres 4.

Des organes élastiques interviennent, ici de manière étagée, entre le voile 2, appartenant à une première partie de l'amortisseur, et, les rondelles de guidage 5,6, appartenant à une deuxième partie de l'amortisseur montée coaxiale par rapport à la première partie.

Ici, ces organes élastiques consistent en une pluralité de ressorts à boudin 11-12 ou en variante en des blocs en matière élastique.

Les ressorts 11-12 sont montés, sous précontrainte, respectivement dans les fenêtres 3-13 et 4-14.

Les ressorts 12 sont montés sans jeu dans les fenêtres 4-14, tandis que les ressorts 11 sont montés sans jeu dans les fenêtres 13 et avec jeu dans les fenêtres 3.

Les ressorts 12 ont une raideur plus faible que celle des ressorts 11, lesdits ressorts 12 intervenant dès le début d'un débattement angulaire relatif entre les rondelles 5,6 et le voile 2, tandis que les ressorts 11 interviennent en différé, du fait de leur montage à jeu dans les fenêtres 3.

A la rondelle 6 est solidarisé un disque de friction 7, qui porte périphériquement, et de part et d'autre, des garnitures de friction annulaires 8.

Ici le disque 7 est solidarisé à la rondelle 6, par l'intermédiaire des colonnettes 9, et les garnitures 8 sont destinées à être serrées entre le plateau de pression et le plateau de réaction de l'embrayage (non représentés), pour solidarisation en rotation avec l'arbre moteur du véhicule automobile.

Entre la rondelle 5 et le voile 2 sont successivement interposées axialement : une rondelle élastique de serrage 15, ici une rondelle "Belleville", et une rondelle de répartition 16 présentant une pluralité de pattes pénétrant dans des trous correspondants 17 de la rondelle 5, pour liaison en rotation avec celle-ci.

Entre la rondelle 6 et le voile 2 ou plus précisément entre le disque 7, accolé à la rondelle 6, et le voile 2, sont successivement interposés axialement: un palier 18 constituant une première rondelle de frottement et une seconde rondelle de frottement 20 au contact de la première.

Le palier 18 présente une partie axiale insérée radialement entre le moyeu 1 et la rondelle 6 et un flasque transversal, dont sont solidaires des pions 19 destinés à s'engager chacun dans une ouverture correspondante de la rondelle 6 pour liaison en rotation avec celle-ci.

Ici, les rondelles de guidage 5 et 6 sont identiques entre elles, en sorte que les pions 19 s'engagent chacun dans une ouverture 17.

Ce palier 18 est avantageusement en matière plastique, par exemple, en matière anti-friction, à base de polyamide, tandis que la seconde rondelle de frottement 20 est en matière métallique et présente au moins une patte du butée 21, au contact avec l'un au moins desdits organes élastiques 11,12. La rondelle 20 est montée à la faveur d'une échancrure pratiquée dans le flasque transversal du palier 18, en sorte qu'elle est centrée par la périphérie interne du palier 18.

Ainsi la rondelle 15 prend appui sur la rondelle 5 et sollicite la rondelle 16 au contact du voile 2, solidarisée au moyeu 1, ici par sertissage, pour serrage du palier 18 et de la rondelle 20 entre le voile 2 et le disque 7.

Suivant l'invention, en combinaison, ladite patte de butée s'étend radialement en étant dépourvue de fenêtre et comporte une protubérance 24 insérée au repos circonférentiellement entre une saillie 9, portée axialement par l'une au moins des rondelles de guidage 5,6, et l'un 12 des organes élastiques et ladite patte 21 est propre à venir en butée avec ladite saillie et ledit organe élastique concernés de manière décrite ci-après.

Ici (figure 2), ladite saillie consiste avantageusement en l'une des entretoises 9, ladite patte 21 s'étendant circonférentiellement entre un ressort 11 et un ressort 12. Cette patte 21 s'étend radialement dans le plan de la rondelle 20 sur une hauteur suffisante pour pouvoir coopérer avec le ressort 12 concerné et l'entretoise 9.

Cette patte 21 est robuste et présente un bord latéral 25, globalement radial, pour contact avec le ressort 12 concerné, et latéralement un deuxième bord radial 26 entaillé en 23-22 pour permettre le passage d'une colonnette 9.

Ce deuxième bord 26 est circonférentiellement à distance du ressort 11.

Ladite patte 21 présente donc une protubérance radiale 24, à la faveur d'une découpe, pratiquée dans ladite patte 21 de forme plate.

Cette découpe présente une partie d'orientation globalement radiale 22, s'étendant radialement au niveau d'une colonnette 9, ladite partie radiale se raccordant à sa périphérie interne à une portion 23 d'étendue globalement circulaire s'étendant circonférentiellement et radialement en dessous de la colonnette correspondante 9.

Ici la rondelle 20 comporte deux pattes 21 diamétralement opposées, et au repos chaque protubérance 24 est au contact par sa partie 22 avec l'entretoise 9 et par le bord 25 avec le ressort 12. Le bord 25 peut présenter une languette d'orientation axiale issue par pliage de la patte pour accroître l'appui du ressort 12, la languette pénétrant dans la fenêtre 4 du voile 2.

Suivant l'invention le ressort 12 sollicite la protubérance 24, au contact de la colonnette 9. C'est donc sans jeu que la patte 21 est insérée circon-férentiellement entre l'entretoise 9 et le ressort 12.

De préférence, on notera qu'au repos, en fonction de la largeur circonférentielle de la protubérance 24, qu'un jeu existe alors entre le ressort 12 et le bord latéral aval de la fenêtre 4, ledit ressort 12 étant en appui contre l'autre bord latéral amont de la fenêtre 4 et contre le rebord 25. De cette façon le ressort 12 est monté sous précontrainte.

Le dispositif fonctionne de la manière suivante:

Dans le sens direct, le moteur du véhicule entraîne le disque 7, en sorte que, la rondelle 20, coincée par sa protubérance 24 entre le ressort 12 et la colonnette 9, est solidaire en rotation des rondelles de guidage 5,6. Par simplicité on supposera que dans le sens direct les rondelles de guidage 5,6 se déplacent dans le sens de la flèche f de la figure 2, par rapport au voile 2 et au moyeu 1 supposés immobiles.

Ainsi un frottement se produit entre le voile 2 et ladite rondelle 20, tandis que le palier 18 solidaire en rotation des rondelles 5,6 se déplace à l'unisson avec la rondelle 20 sans frottement.

Durant cette phase les ressorts 12 sont comprimés, et la rondelle 16 fait également sentir ses effets, un frottement se produisant entre celle-ci et le voile 2.

Lorsque le mouvement est poursuivi, les ressorts 11 interviennent à leur tour après rattrapage du jeu entre les fenêtres 3-13. La limitation du débattement, entre le voile 2 et les rondelles 5-6, est obtenue, par venue en butée des entretoises 9 avec le bord des échancrures 10.

En variante, la limitation peut être obtenue par venue à spires jointives des ressorts 11-12.

Dans le sens rétro, les roues du véhicule entraînant le moteur, un mouvement relatif avec frottement se produit entre le palier 18 et la rondelle 20.

Ceci est dû au fait, qu'entre la rondelle 20 et le voile 2 on a un frottement du type acier sur acier, tandis que, entre la rondelle 20 et le palier 18, on a un frottement du type acier sur polyamide, le coefficient de frottement acier sur acier étant supérieur au coefficient de frottement acier sur polyamide.

Ainsi aucun mouvement relatif n'a lieu entre le voile 2 et la rondelle 20 durant cette phase.

Bien entendu la présente invention n'est pas limitée aux exemples de réalisation décrits.

En particulier le dispositif amortisseur de torsion peut comporter trois étages de ressorts, comme décrit dans le susmentionné document FR-A-2 183 389 ou plus.

Les entretoises peuvent passer à l'intérieur de certaines fenêtres, comme décrit dans le susmentionné document FR-A-2 183 389, les pattes de la rondelle étant alors radialement plus courtes.

Les entretoises peuvent être plates, comme décrit par exemple dans le document FR-A-2 097 289.

Ces entretoises peuvent être issues de la matière prélevée dans une fenêtre de l'une des rondelles de guidage pour venir se sertir sur l'autre rondelle de guidage, après traversée de celle-ci.

Une autre rondelle de frottement, à pattes de butée, peut être insérée entre le voile 2 et la rondelle 5, au contact de la rondelle 16, qui est alors en une matière permettant d'avoir un coefficient de frottement différent, entre, d'une part, la rondelle à patte de butée et le voile 2, et d'autre part, entre le voile 2 et ladite rondelle 16. La patte 21 peut s'étendre radialement en étant décalé axialement par rapport à la rondelle 20. Elle peut ne pas présenter de découpe, le bord 26 étant confondu avec la partie 22.

De même plusieurs rondelles de frottement peuvent être disposées entre le voile 2 et la rondelle 6, pour multiplication des faces de frottement, l'une au moins desdites rondelles étant solidaire en rotation dudit voile.

La protubérance 24 peut être montée avec un léger jeu, entre la colonnette 9 et le ressort 12 concernés.

Les protubérances 24 peuvent être implantées entre un ressort 11 et une entretoise 9.

Le bord supérieur des fenêtres 3-4 peut être supprimé, en sorte que les logements 3-4 peuvent consister en des échancrures.

Le voile 2 peut être solidarisé au moyeu 1 autrement que par sertissage, par exemple, par soudage.

Le palier 18 peut être solidarisé en rotation au voile 2, au contact de celui-ci, ces pions 18 pénétrant alors dans des passages prévus dans le voile 2, tandis que la rondelle 20 peut être au contact du disque 7.

Dans ce cas, dans le sens direct, un frottement se produit, entre la rondelle 20 et le palier 18, tandis qu'en sens rétro un frottement se produit, entre la rondelle 20 et le disque 7.

Bien entendu ce disque 7 peut ne pas être accolé à la rondelle 6 et être fixé à l'une des rondelles de guidage par des rivets distincts des colonnettes 9.

Dans ce cas on utilise lesdits rivets pour constituer lesdites saillies selon l'invention.

En variante la rondelle de guidage peut être emboutie localement pour former ladite saillie, l'amplitude de la déformation étant déterminée pour qu'elle puisse coopérer avec la patte de butée.

Dans ce cas pour diminuer l'amplitude desdits emboutis, avantageusement ladite rondelle de frottement est adjacente à ladite rondelle de guidage, tandis que l'autre rondelle de frottement est liée en rotation au voile de moyeu qui peut être monté circonférentiellement à jeu par rapport au moyeu.

Pour des raisons de standardisation, les deux rondelles de guidage peuvent être dotées de tels emboutis. D'une manière générale, les saillies par coopération avec la partie 23 peuvent centrer la rondelle 20.

On appréciera que toutes les dispositions décrites ci-dessus sont favorables à la conservation de la standardisation de l'amortisseur de torsion, et sans affaiblissement des rondelles de guidage et du voile.

La rondelle 18 n'est pas forcément un palier, elle peut être liée en rotation aux rondelles de guidage, à la faveur des entretoises 9, comme décrit dans le susmentionné document FR-A-2 183 389.

Enfin les rondelles de guidage 5,6 peuvent être solidaires du moyeu 1, par exemple par sertissage, tandis que le voile 1 peut être monté libre par rapport au moyeu 1 et porter le disque 7, éventuellement dépourvu de garnitures 8 pour sa fixation directe à l'arbre moteur.

## Revendications

1. Dispositif amortisseur de torsion, notamment pour embrayages de véhicules automobiles, du genre comportant deux parties coaxiales montées rotatives l'une par rapport à l'autre, pour un secteur de débattement angulaire au moins, à l'encontre, d'une part, de moyens de frottement interposés axialement entre lesdites parties et comportant, au moins, une première rondelle de frottement (18) liée en rotation à l'une des parties et, au contact de ladite première rondelle de frottement, une seconde rondelle de frottement (20) comprenant au moins une patte de butée avec différenciation des frottements entre les deux faces de la seconde rondelle de frottement (20), et, d'autre part, d'organes élastiques interposés circonférentiellement entre lesdites parties coaxiales, dans lequel l'une des parties coaxiales comporte un voile (2), et l'autre, deux rondelles de guidage (5,6) disposées de part et d'autre du voile (2), **caractérisé en ce qu'**en combinaison ladite patte de butée (21) s'étend globalement radialement en étant dépourvue de fenêtre et comporte une protubérance radiale (24) insérée au repos circonférentiellement entre une saillie (9), portée axialement par l'une au moins des rondelles de guidage (5,6), et l'un des organes élastiques (11,12), dit organe élastique concerné, et **en ce que** l'organe élastique concerné (11,12) sollicite la protubérance au contact de la saillie (9) en sorte que ladite patte de butée (21) est insérée sans jeu entre ladite saillie (9) et ledit organe élastique concerné.

2. Dispositif selon la revendication 1, **caractérisé en ce que** l'organe élastique concerné (11,12) s'appuie circonférentiellement, d'une part, sur un bord d'un logement (4), pratiqué dans le voile (2) pour montage dudit organe, et d'autre part, sur ladite protubérance (24), en sorte que ledit organe élastique est monté sous précontrainte.

3. Dispositif selon la revendication 2, **caractérisé en ce que** ladite protubérance (24) est formée à la faveur d'une découpe pratiquée dans ladite patte (21).

4. Dispositif selon la revendication 3, **caractérisé en ce que** ladite découpe présente une partie d'orientation globalement radiale (22) s'étendant radialement au niveau de la saillie (9) concernée et se raccordant à sa périphérie interne à une portion (23) d'étendue globalement circulaire s'étendant radialement en dessous de ladite saillie (9) concernée.

5. Dispositif selon l'une quelconque des revendications 1 à 4, dans lequel ledit organe élastique (11,12) consiste en un ressort monté dans une fenêtre (4) du voile (2), **caractérisé en ce que**, au repos, un jeu existe entre le bord latéral aval de la fenêtre (4) et le ressort (12), ledit ressort (12) étant en appui contre le bord latéral amont de la fenêtre (4), et le bord latéral (25) concerné de la protubérance (24).

6. Dispositif selon l'une quelconque des revendications précédentes, dans lequel les deux rondelles de guidage (5,6) sont reliées l'une à l'autre par des entretoises (9) traversant le voile (2), à la faveur d'échancrures (10) qu'il présente à cet effet, **caractérisé en ce que** lesdites saillies (9) sont constituées par lesdites entretoises (9).

7. Dispositif selon l'une quelconque des revendications 1 à 5, dans lequel l'une des rondelles de guidage (5,6) porte un disque (7) rapporté sur celles-ci par des rivets, **caractérisé en ce que** lesdites saillies sont constituées par lesdits rivets.

8. Dispositif selon l'une quelconque des revendications 1 à 5, **caractérisé en ce que** lesdites saillies sont constituées par des emboutis locaux pratiqués dans l'une au moins des rondelles de guidage (5,6).

## Patentansprüche

1. Drehschwingungsdämpfer, insbesondere für Kraftfahrzeugkupplungen, umfassend zwei koaxiale Teile, die im Verhältnis zueinander wenigstens für einen Winkelauslenkungssektor drehbeweglich angebracht sind, und zwar einerseits entgegen Reibungsmitteln, die axial zwischen den genannten Teilen eingesetzt sind und die mindestens eine erste Reibscheibe (18), die drehfest mit einem der Teile verbunden ist, und in Berührung mit der genannten ersten Reibscheibe eine zweite Reibscheibe (20) aufweisen, die mindestens einen Anschlagansatz mit Differenzierung der Reibungen zwischen den beiden Seiten der zweiten Reibscheibe (20) umfaßt, und andererseits entgegen elastischen Organen, die in Umfangsrichtung zwischen den genannten koaxialen Teilen eingesetzt sind, wobei einer der koaxialen Teile eine Mitnehmerscheibe (2) und der andere zwei Führungsscheiben (5, 6) umfaßt, die beiderseits der Mitnehmerscheibe (2) angeordnet sind,
**dadurch gekennzeichnet,**
**daß**, in Kombination, der genannte Anschlagansatz (21) insgesamt radial verläuft, wobei er ohne Fenster ausgeführt ist und eine radiale Ausstülpung (24) aufweist, und er im Ruhezustand am Kreisumfang zwischen einem axial an mindestens einer der Führungsscheiben (5, 6) angeordneten Vorsprung (9) und einem der elastischen Organe (11, 12), dem sogenannten betroffenen elastischen Organ, eingesetzt ist, und daß das betroffene elastische Organ (11, 12) die Ausstülpung in Kontakt mit dem Vorsprung (9) bringt, so daß der Anschlagansatz (21) spielfrei zwischen dem Vorsprung (9) und dem betroffenen elastischen Organ eingesetzt ist.

2. Drehschwingungsdämpfer nach Anspruch 1, **dadurch gekennzeichnet, daß** das betroffene elastische Organ (11, 12) am Kreisumfang einerseits auf einer Kante einer Aufnahme (4) aufliegt, die in der Mitnehmerscheibe (2) für den Einbau des genannten Organs vorgesehen ist, und andererseits auf der genannten Ausstülpung (24), so daß das genannte elastische Organ unter Vorspannung eingebaut ist.

3. Drehschwingungsdämpfer nach Anspruch 2, **dadurch gekennzeichnet, daß** die genannte Ausstülpung (24) vermittels eines Einschnitts gebildet wird, der in dem genannten Ansatz (21) vorgesehen ist.

4. Drehschwingungsdämpfer nach Anspruch 3, **dadurch gekennzeichnet, daß** der genannte Einschnitt einen insgesamt radial ausgerichteten Teil (22) aufweist, der sich radial in Höhe des betroffenen Vorsprungs (9) erstreckt und sich an seiner Innenperipherie an einen Abschnitt (23) mit insgesamt kreisförmigem Verlauf anschließt, der sich radial unterhalb des betroffenen Vorsprungs (9) erstreckt.

5. Drehschwingungsdämpfer nach einem der Ansprüche 1 bis 4, bei dem das genannte elastische Organ (11, 12) aus einer Feder besteht, die in einem Fenster (4) der Mitnehmerscheibe (2) angebracht ist, **dadurch gekennzeichnet, daß** im Ruhezustand ein Spiel zwischen der hinteren Seitenkante des Fensters (4) und der Feder (12) besteht, wobei die genannte Feder (12) an der vorderen Seitenkante des Fensters (4) und der betroffenen Seitenkante (25) der Ausstülpung (24) anliegt.

6. Drehschwingungsdämpfer nach einem der vorangehenden Ansprüche, bei dem die zwei Führungsscheiben (5, 6) durch Abstandstücke (9) miteinander verbunden sind, die durch die Mitnehmerscheibe (2) vermittels dazu vorgesehener Aussparungen (10) hindurchgehen, **dadurch gekennzeichnet , daß** die genannten Vorsprünge (9) durch die genannten Abstandstücke (9) gebildet werden.

7. Drehschwingungsdämpfer nach einem der Ansprüche 1 bis 5, bei dem eine der Führungsscheiben (5, 6) eine Scheibe (7) trägt, die durch Nieten daran angesetzt ist, **dadurch gekennzeichnet, daß** die genannten Vorsprünge durch die genannten Nieten gebildet werden.

8. Drehschwingungsdämpfer nach einem der Ansprüche 1 bis 5, **dadurch gekennzeichnet, daß** die genannten Vorsprünge durch örtliche Vertiefungen gebildet werden, die mindestens in einer der Führungsscheiben (5, 6) vorgesehen sind.

## Claims

1. A torsion damping device, especially for motor vehicle clutches, of the kind comprising two coaxial parts mounted for rotation of one with respect to the other over at least one sector of angular displacement, against the action of, firstly, friction means interposed axially between the said parts and comprising, at least, a first friction ring (18) which is coupled in rotation to one of the parts, together with a second friction ring (20) in contact with the said first friction ring and comprising at least one engagement lug, with differential friction between the two faces of the second friction ring (20), and secondly, resilient members interposed circumferentially between the said coaxial parts, wherein one of the coaxial parts comprises a damper plate (2), while the other comprises two guide rings (5, 6) arranged on either side of the damper plate (2), **characterised in that**, in combination, the said engagement lug (21) extends in a generally radial direction, being without any window, and includes a radial protuberance (24) which, in the rest position, is inserted circumferentially between a projecting element (9), carried axially by at least one of the guide rings (5, 6), and one of the resilient members (11, 12), referred to as the resilient member concerned, and **in that** the resilient member concerned (11, 12) biases the protuberance into contact with the projecting element (9) whereby the said engagement lug (21) is inserted, without any clearance, between the said projecting element (9) and the said resilient member concerned.

2. A device according to Claim 1, **characterised in that** the resilient member concerned (11, 12) is in circumferential engagement, firstly, on one edge of an aperture (4) formed in the damper plate (2) for mounting of the said member therein, and secondly, on the said protuberance (24), in such a way that the said resilient member is fitted under prestress.

3. A device according to Claim 2, **characterised in that** the said protuberance (24) is defined by a cut-out formed in the said lug (21).

4. A device according to Claim 3, **characterised in that** the said cut-out has a portion (22) orientated generally radially and extending radially to the level of the projecting element (9) concerned, being joined at its inner periphery to a portion (23) of generally circular configuration which lies radially inside the said projecting element (9) concerned.

5. A device according to any one of Claims 1 to 4, in which the said resilient member (11, 12) consists of a spring mounted in a window (4) of the damper plate (2), **characterised in that**, in the rest position, there is a clearance between the downstream lateral edge of the window (4) and the spring (12), the said spring (12) being in engagement against the upstream lateral edge of the window (4) and the lateral edge (25) concerned of the protuberance (24).

6. A device according to any one of the preceding Claims, wherein the two guide rings (5, 6) are connected to each other by means of spacers (9) that extend through the damper plate (2) via slots (10) formed therein for that purpose, **characterised in that** the said projecting elements (9) consist of the said spacers (9).

7. A device according to any one of Claims 1 to 5, wherein one of the guide rings (5, 6) carries a disc (7) which is attached on these latter by means of rivets, **characterised in that** the said projecting elements are the said rivets.

8. A device according to any one of Claims 1 to 5, **characterised in that** the said projecting elements comprise portions press-formed locally in at least one of the guide rings (5, 6).
